Europäisches Patentamt

European Patent Office

Office européen des brevets

(11) Publication number: **0 396 105**
**A2**

(12) **EUROPEAN PATENT APPLICATION**

(21) Application number: **90108276.8**

(22) Date of filing: **30.04.90**

(51) Int. Cl.⁵: **H04N 1/32**

(30) Priority: **02.05.89 JP 113898/89**
**02.05.89 JP 113899/89**

(43) Date of publication of application:
**07.11.90 Bulletin 90/45**

(84) Designated Contracting States:
**DE FR GB**

(71) Applicant: **MINOLTA CAMERA KABUSHIKI KAISHA**
**Osaka Kokusai Building 3-13, 2-chome,**
**Azuchi-Machi Chuo-ku**

**Osaka-shi Osaka 541(JP)**

(72) Inventor: **Hashimoto, Yoshiyuki, c/o Minolta Camera K.K.**
**Osaka Kokusai Building, 3-13 2-chome,**
**Azuchi-Machi**
**Chuo-ku, Osaka-shi, Osaka 541(JP)**

(74) Representative: **Glawe, Delfs, Moll & Partner**
**Patentanwälte**
**Postfach 26 01 62**
**D-8000 München 26(DE)**

(54) **Data communication terminal system capable of switching between telephone receiver and data terminal unit.**

(57) A data communication terminal system in which a communication is carried out via an available telephone line by switching a telephone receiver and a data terminal unit, characterized by: switching means (15) for switching a data communication mode for transmitting data derived from the data terminal system together with a communication carrier, and a telephone communication mode for talking by the telephone receiver without the communication carrier; off-hook detecting means (11) for detecting an off-hook condition of the telephone receiver so as to output a signal for instructing said switching means (15) to change the data communication mode into the telephone communication mode; announcing means (21/23) for announcing a change in the communication mode to an operator; and, control means (15) for actuating the announcing means (21/23) when an operation mode of a data communication terminal system employed at an opposite side is switched to the telephone communication mode.

EP 0 396 105 A2

FIG. 2

## Field of the Invention

The present invention generally relates to a data communication terminal system capable of performing a data communication via a telephone line. More specifically, the present invention is directed to a data communication terminal system capable of switching a telephone receiver and a data terminal unit.

## Description of the Related Art

In general, a data communication terminal system for transmitting data via a telephone line has a problem. For instance, in case that data communication is carried out via a modem (i.e., modulator and demodulator) in a facsimile apparatus, there is a difficulty that an operator at a reception side may mistakenly pick up a telephone receiver when the data communication terminal system at a transmission side sends facsimile data to that of the reception side. This case may be such a condition that the data communication terminal system employed at the reception side is not set to an automatic reception waiting condition. In such a case, if an operator at the transmission side can easily make a conversation with an operator at the reception side, it is very convenience.

Furthermore, if a conversation can be made between them during and after the data communication, it is very useful in such a data communication system.

However, since the modem occupies the telephone line during the data communication by utilizing the modem in a normal condition, it is rather difficult to change the telephone line to the telephone receiver.

In the conventional data communication terminal system, when a telephone receiver employed at a transmission side is picked up during the data communication, the modem is disconnected from the line and this disconnected line is connected to the telephone receiver. That is to say, the off-hook condition of the telephone receiver at the transmission side is detected, whereby the operation mode is changed from the data communication mode to the conversation mode.

Precisely speaking, to commence the data communication, a communication application program is first initialized in the data terminal unit (DTE) employed at the transmission side and a predetermined command is inputted. As a result, a modem control circuit employed in DTE transmits a call signal for data communication purposes to a callee, i.e., a data communication terminal system at a reception side.

A modem control circuit employed in the data communication terminal system at the reception side sends back an answer tone to the transmission side in response to this call signal.

However, if the operator at the reception side mistakenly picks up the telephone receiver in response to dialing tone (call signal), namely this telephone receiver is connected to the telephone line at the reception side, the modem control circuit employed at the transmission side merely outputs a result code of "voice" to DTE employed at the transmission side, because no answer tone is inputted from the reception side in the conventional data communication terminal system. As a result, the operator at the transmission side observes this "voice" message to judge that no data is received by the reception side. Thereafter, when the operator at the transmission side picks up or hooks off the telephone receiver, this off-hook condition is detected so as to connect the telephone line to the telephone receiver. At this time, if the callee has still held the telephone receiver at the off-hook state, namely he or she has hung on the telephone receiver, a conversation can be made between the operators at both the transmission side and reception side.

In such a transmission side, the modem control circuit of DTE is disconnected from the telephone line by setting the telephone receiver to the off-hook condition, and thus the telephone line is connected to the telephone receiver. That is to say, the off-hook condition of the telephone receiver employed at the transmission side is detected in this modem control circuit so that the operation mode is changed from the data communication mode into the conversation mode. As a result, one modem fails in a connection with the other modem because of this conversation mode. In such a case, since the communication carrier to be sent from the reception side is not detected in the transmission side, the communication carrier detections signal (DCD signal) to be sent to the reception side is brought into the inactive state.

However, in the above-described conventional data communication terminal systems, even when the telephone receiver is picked up so as to make a conversation by way of a telephone receiver during the data communication, no announcement on the operation change from the communication mode to the conversation mode can be reported to the opposite side during the data communication.

Furthermore, it is very inconvenience in the conventional data communication terminal system in which the operation mode is not automatically changed from the data communication mode to the conversation mode by detecting the off-hook operation of the receiver employed at the reception side, but the operation mode can be switched to the conversation mode only when the operator at the transmission side becomes aware of the off-hook operation of the receiver employed at the reception side.

In addition, once the telephone receiver is picked up by the operator at the transmission side during the data communication, the data communication cannot be again performed even when no conversation can be established after this off-hook operation of the telephone receiver.

Furthermore, in the conventional data communication systems, the communication carrier detection signal (DCD signal) is set to ON/OFF (active/inactive) in accordance with a presence of the communication carrier. As a consequence, under the inactive condition of the DCD signal in the conversation mode, the data communication terminal system may erroneously reset (hung up) by the application program under execution in the data terminal unit (for instance, a personal computer). As a result, to restart the application program (namely to restart the data communication after the conversation), there is a difficulty that the operation must be commenced from the first stage by initializing the application software.

## Summary of the Invention

Therefore, the present invention has been made in an attempt to solve the problems of the conventional data communication terminal system, and firstly has an object to provide a data communication terminal system capable of announcing the operation mode change to the conversation mode to the reception side during the data communication so that the conversation can be made between the transmission side and reception side.

Secondly, another object of the present invention is to provide a data communication terminal system in which the operation mode can be recovered to the data communication mode in case that no conversation can be made after picking up the telephone receiver during the data communication operation.

Thirdly, a further object of the present invention is to provide a data communication terminal system capable of preventing that the communication application program is hung up under execution in order to readily restart the data communication in case that the operation mode is changed from the data communication mode into the conversation mode.

To achieve the above-described objects, the data communication terminal system according to the present invention, connected between a data terminal unit and a telephone line so as to perform a data communication from or to an opposite side the telephone line, comprises:
a monitor speaker;
a display terminal;
a changing means for changing a data communication into a telephone conversation when a telephone receiver employed at the opposite side is brought into an off-hook condition during the data communication; and,
an announcing means for announcing the operation mode has been changed from the data communication into the telephone conversation by way of the monitor speaker and/or display terminal when a communication carrier supplied from the opposite side disappears.

In the data communication terminal system according to the present invention, when the telephone receiver is hooked off during the data communication with employment of the telephone line, the data communication is changed into the telephone communication by the changing means. As a result, the telephone communication is available with use of the telephone line and also the communication carrier disappears. In response to disappearance of the communication carrier supplied from the transmission side, the announcing means announces that the operation mode is changed from the data communication mode into the telephone communication by way of both of the monitor speaker and display terminal, or at least one of them.

As a consequence, according to the present invention, the operation mode change from the data communication mode to the conversation mode can be clearly announced to the opposite side and therefore the conversation can be made between the transmission side and reception side.

In the above-described data communication terminal system according to the present invention, there is employed a recovery means for automatically recovering the operation mode to the data communication mode when the telephone communication is not executed within a predetermined time period after the announcement.

As a consequence, in this data communication terminal system, after such an announcement that the operation mode is changed from the data communication into the telephone communication is made by either the monitor speaker and/or display terminal, when the telephone communication is not established within a predetermined time period, the operation mode thereof is automatically recovered from the telephone communication to the data communication by the recovery means.

As a result, in accordance with the data communication terminal system of the present invention, even though the operation mode is changed into the conversation mode by hooking off the telephone receiver during the data communication, the operation mode can be readily recovered from the conversation mode into the data communication mode in case that no communication is made due to absence of an operator, so that the data communication can be continued.

Furthermore, in the data communication terminal system according to the present invention connected between a data terminal unit and a telephone line so as to perform a data communication with employment of the telephone line, there are provided a changing means for changing a data communication into a telephone communication when a demand for performing the telephone communication is made during the data communication; and means for holding at an active, a signal representative of the data communication to the data terminal unit in response to this changing operation.

In the data communication terminal system according to the present invention, the changing means changes the operation mode thereof from the data communication mode into the telephone communication mode when the demand for performing the telephone communication is made during the data communication mode. The holding means holds at an active state, a signal indicative the data communication to the data terminal unit, e.g., a communication carrier detection signal in response to this changing operation. That is to say, in the data terminal unit, the end of the data communication is not detected and such a condition that the data is under communication is maintained.

In accordance with the data communication terminal system of the present invention, when the operation mode thereof is switched from the data communication mode to the conversation mode, although the communication carrier disappears, it is possible to prevent hanging up the application program under execution in the data terminal unit.

In a data communication terminal system according to the present invention, there are employed a changing means for changing the above-described telephone line into either a telephone receiver or a data terminal unit for a connection purpose; a judging means for judging that a callee corresponds to either the data terminal unit or telephone receiver; an off-hook detecting means for detecting that the telephone receiver is brought into a off-hook condition; and also a control means for transmitting a waiting signal to the data terminal unit, by which the telephone receiver is brought into a connection waiting condition with the telephone line when the telephone receiver is prepared at the reception side and the telephone receiver employed at the transmission side is hooked off, and for connection the telephone line with the telephone receivers.

In the data communication terminal system, when a callee picks up the telephone receiver at the commencement of the data communication, this condition is detected by the judging means at the transmission side, and the off-hook detecting means detects that the telephone receiver employed at the transmission side is hooked off. The telephone receiver employed at the transmissions side is connected to the telephone line by the changing means, which is controlled by the control means. Simultaneously, the control means sends the waiting signal by which the data terminal unit is brought into the connection waiting condition with the telephone line to the data terminal unit. For instance, the control means maintains the communication carrier detection signal at the active condition and also sends out the dummy signal indicative of the connection with the telephone line to the data terminal unit.

As a result, the conversation is available with the operator at the reception side and furthermore the data communication can be restarted by the simple operation after this conversation.

In accordance with the data communication terminal system of the present invention' in such cases that the operator at the reception side mistakenly picks up the telephone receiver when the data communication is commenced, the operator at the transmission side picks up the telephone receiver and immediately can make a conversation with the operator at the reception side, whereby he or she can inform that the data communication is required.

Moreover, in case that the operation mode of the system is changed from the data communication mode to the conversation mode by picking up the telephone receiver employed at the transmission side, it can prevent the hanging up the communication application program under execution in the data terminal unit. As a consequence, although the communication carrier disappears, the data communication can be readily restarted.

Brief Description of the Drawings

For a better understanding of these objects and features of the present invention, reference is made to the following detailed description of the invention to be read in conjunction with the following drawings, in which:

Fig. 1 is a schematic block diagram of a general-purpose data communication system employing modems;

Fig. 2 is a schematic block diagram of an internal circuit of a data communication terminal apparatus according to a preferred embodiment of the present invention; and

Figs. 3A to 5 are flowcharts for representing various processes performed in modem CPU employed in the modem control circuit 15 of the data communication system shown in Fig. 2.

Detailed Description of the Preferred Embodiments

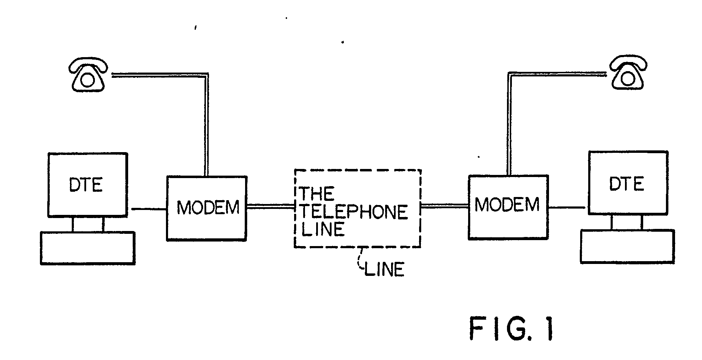

Fig. 1 illustrates an arrangement of a general-purpose data communication system in which modems are employed. That is to say, modems are connected to each other via a telephone line "LINE". In case of a communication mode in which a data communication is performed with employment of the telephone line LINE, data terminal units "DTE" are connected to each of the modems, and a data communication is carried out between one data terminal unit DTE and the other data terminal unit DTE via these modems and telephone line LINE.

It should be noted that the data terminal unit DTE which may be a personal computer or a host computer is connected via an interface (RS 232C etc.) (not shown in detail) to the corresponding modem.

In a speech mode, the respective modems are connected through the telephone line LINE to each other, and the modems are changed so as to be connected to the respective telephones.

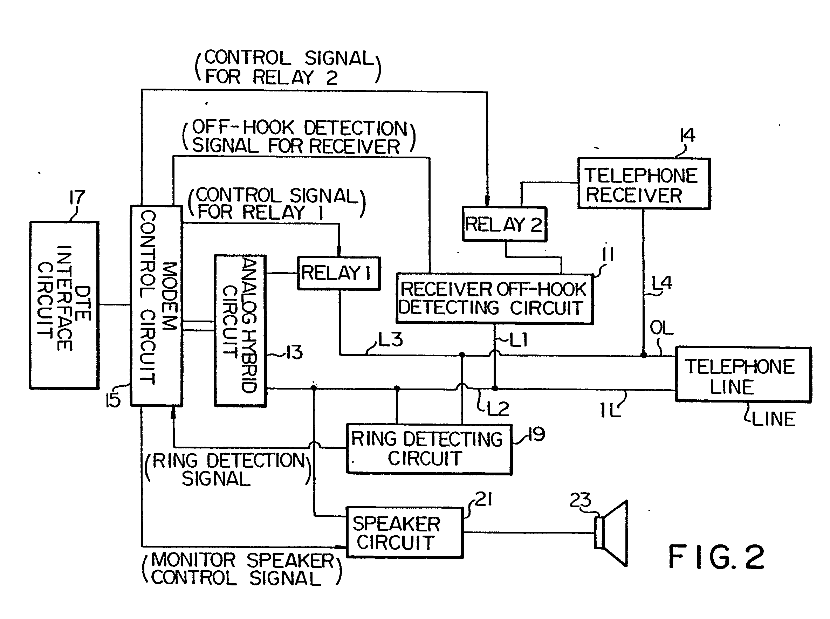

Fig. 2 is a schematic block diagram of a data communica tion terminal apparatus according to a preferred embodiment of the present invention.

In Fig. 2, a receiver side signal line IL connected to a telephone line LINE is branched into two signal lines L1 and L2, and one signal line L1 is connected via a receiver off-hook detecting circuit 11 and a relay 2 to a telephone set (receiver) 14. The other signal line L2 is connected to an analog hybrid circuit 13.

The receiver off-hook detecting circuit 11 is constructed of a photo-coupler. This receiver off-hook detecting circuit 11 detects a signal current flowing through the signal line L1 toward the telephone receiver 14, so that various conditions whether the telephone receiver 14 is under the off-hook or on-hook is inputted as a receiver off-hook detection signal to a modem control circuit 15.

The relay 2 is turned ON/OFF in response to a control signal for relay 2 derived from the modem control circuit 15. That is to say, the relay 2 has, for instance, a normally-connecting type construction, and is turned OFF in response to the control signal for relay 2.

On the other hand, a signal line "OL" at a transmission side to the telephone line LINE is branched to two signal lines L3 and L4 similar to that of the reception side. One branched signal line L3 is connected via the relay 1 to the above-described analog hybrid circuit 13. Also, the other branched signal line L4 is connected to the telephone receiver 14.

The relay 1 connects and disconnects the modem control circuit 15 and telephone line LINE, and is controlled in response to the control signal for relay 1 supplied from the modem control circuit 15.

The analog hybrid circuit 13 is connected to the modem control circuit 15. In the analog hybrid circuit 13, a transformer is employed so as to electrically isolate this analog hybrid circuit 13 from the telephone line LINE.

Functions of the analog hybrid circuit 13 are to adjust a signal level of an output signal which is sent out from the modem control circuit 15 to the telephone line LINE, and also to adjust another signal level of an input signal from the telephone line LINE thereto.

Although not shown in detail, the modem control circuit 15 is mainly constructed by well-known modem IC, modem control CPU, and modem firmware ROM (Read Only Memory).

The modem control circuit 15 is connected to a DTE (data terminal unit) interface circuit 17. The DTE interface circuit 17 is to control input/output between the modem control circuit 15 and data terminal unit (DTE).

A ring detecting circuit 19 is connected to signal lines L2 and L3 between the telephone line LINE and analog hybrid circuit 13. This ring detecting circuit 19 is constructed by employing a photocoupler and the like, and detects a variation in a voltage applied to the telephone line LINE, so that the detected signal is inputted as a ring detection signal into the modem control signal 15.

A speaker circuit 21 controls a monitor speaker 23 built in the data communication terminal system.

It should be noted that a display terminal is not indicated in this data communication terminal system.

In the above-described data communication terminal system with the above-described arrangements, a normal data communication is performed in such a manner that the relay 2 is turned OFF (opened) and the relay 1 is turned ON (closed) under the control of the modem control circuit 15. As a result, the telephone receiver 14 is being disconnected from the telephone line LINE. Then, the modem control circuit 15 transmits a data transmitting carrier (communication carrier) via the signal lines L2 and L3, and the telephone line LINE to a data receiving end, and furthermore receives another communication carrier via the telephone line LINE and signal lines L2 and L3 from the data receiving end.

Since the data communication terminal system according to the present invention has such a function capable of switching a conversation mode and a data communication mode (will be described later), the modem control circuit 15 enables the relay 2 to be turned ON (being connected). As a result, the receiver off-hook detecting circuit 11 can detect that the telephone receiver 14 is under the off hook condition (i.e., is hooked up).

As previously described, since the switching function between the conversation mode/data communication mode is set to both of the terminal units at the transmission side, and at the reception side, it is possible to be changed to the conversation mode during the data communication. In other words, during the data communication, the telephone receiver 14 is hooked off at the mode switching side, so that an announce is made by a monitor speaker at the mode switching side for indicating that the conversation mode is desired. The announce may be that another telephone receiver is requested to be hooked off.

When no answer is made by the telephone receiver due to the fact that the callee is not present near the terminal unit, the caller, i.e., the mode switching side inputs a command within a predetermined time and brings the telephone receiver into the on-hook condition. As a consequence, in the modem control circuit 15 at the mode switch ing side, where the operation condition has been once changed from the data communication mode to the conversation mode, the data communication mode is recovered from the conversation mode. From the mode switching side, the answer tone is automatically sent out after a predetermined time has elapsed, and the communication carrier is again transmitted. Accordingly, the data communication can be restarted.

Also, even when the transmission of the communication carrier is interrupted (i.e., the communication carrier disappears) after the operation state is changed into the conversation mode, a communication carrier detection signal (DCD signal) sent from the DTE interface unit 17 to DTE is maintained at an active condition in the data communication system according to the present invention. As a result, even when a certain communication program is executed in both of the data terminal units, these data terminal units are not reset based upon this communication program. This is because if the DCD signal representative of the interruption of the communication carrier is brought into the inactive state, the terminal unit per se may be reset in accordance with this communication program. In the conversation mode, by holding the DCD signal at the active state while the conversation is made by way of the telephone receivers, the DTE which executes the application program is mistakenly recognized as being a data communication operation. This is to prevent resetting operations by the software. Even if the operation mode if temporarily changed into the conversation mode, the data communication condition can be maintained and the operation condition can be recovered to the data communication mode in response to the command input if the communication software includes the terminal mode.

It should be noted that this DCD signal becomes an inactive condition in case that the connection with the telephone line LINE is interrupted in both the conversation mode and data communication mode.

A control to change this data communication mode to the conversation mode is executed under the control of modem CPU of the modem control circuit 15.

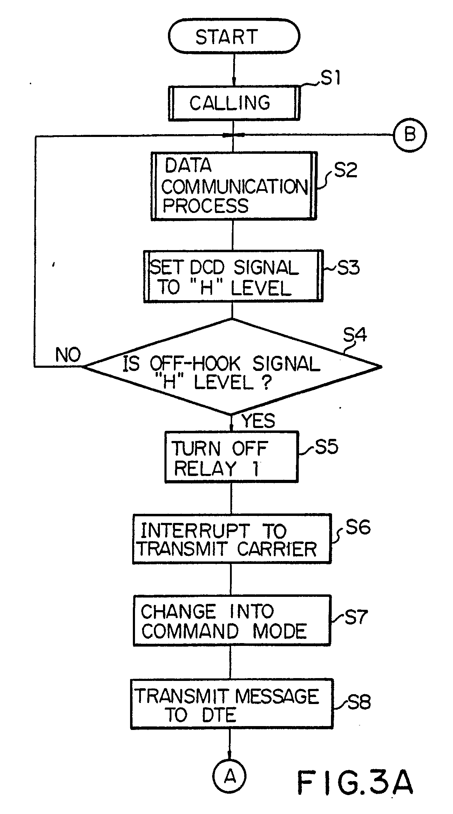

Figs. 3A to 4B are flowcharts for representing processes performed by the modem CPU in the modem control circuit 15 of the data communication terminal apparatus.

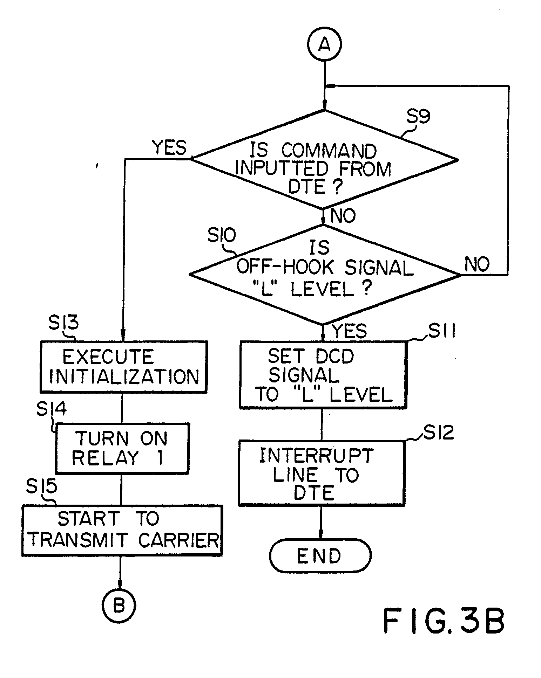

Figs. 3A and 3B show the control program at the transmission side.

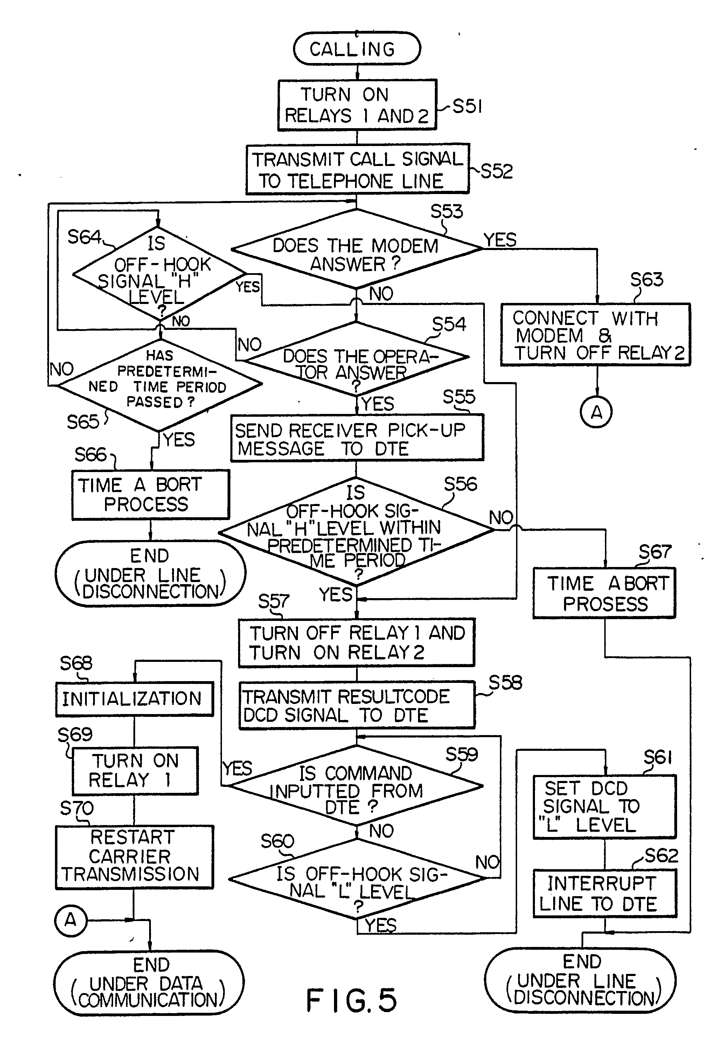

At a step S1, a calling process is made. This process is executed by a subroutine process shown in Fig. 5.

At a step S2 in this program, such a data communication process that both the relays 1 and 2 are turned ON (being connected) is performed under the condition of the trunk line connection to DTE. This data communication process is effected as a subroutine process.

At a step S3, the data carrier detection signal (DCD signal) is held at an "H" level (active level). This step is also executed as a subroutine process.

At a step S4, a judgment is made whether or not the off-hook detection signal derived from the receiver off-hook detecting circuit 11 is equal to an "H" level. If the receiver 14 at the transmission side is brought into the off-hook condition (an H level), the control process is advanced to a step S5. Conversely, if the receiver 14 is brought into the on-hook condition (an L level), the control process is returned to the previous step S2. This is because a judgment is made that the change to the conversation mode is not required.

When the change to the conversation mode is requested, the relay 1 is turned OFF (opened) at the next step S5 so as to interrupt the connection between the modem control circuit 15 and telephone line LINE. It should be noted that if the terminal mode is selected at DTE, the off-hook condition may be displayed on the monitor screen.

Then, the control process is advanced to a step S6, the transmission of the communication carrier is interrupted. Further, at a step S7, the modem control circuit 15 changes the data communication mode (on-line mode) into the command mode (off-line mode).

Thereafter, the control process is advanced to a step S8, a message is sent to the data terminal unit DTE of the reception side, by which the telephone receiver at the reception side, i.e., the terminal to be switched, is to be brought into the off-hook condition, i.e., to be hooked up (changed into the conversation mode). For instance, such a message that the telephone receiver is requested to be brought into the off-hook condition is announced by a monitor speaker at the terminal to be switched. At the same time, such an indication that this telephone receiver is to be hooked up is displayed on the display unit of the terminal unit at the reception side. That is to say, when the communication carrier sent from the transmission side disappears, both the monitor speaker and display terminal provided at the reception side announce that the data communication mode is changed into the telephone conversation mode.

In this case, if an operator at the reception side hooks off the telephone receiver, the operators at both of the transmission side and reception side can talk with each other via the telephone line LINE because of the conversation mode. If no conversation is made between them due to absence at the reception side (i.e., the callee does not hook off the telephone receiver for a predetermined time period), a selection is made whether the operation mode is returned to the data communication mode, or ended at the transmission side. When the operation mode is ended, the telephone receiver 14 is hooked on, or hung up. Similarly, when the conversation is accomplished, the telephone receiver 14 is brought into the on-hook condition.

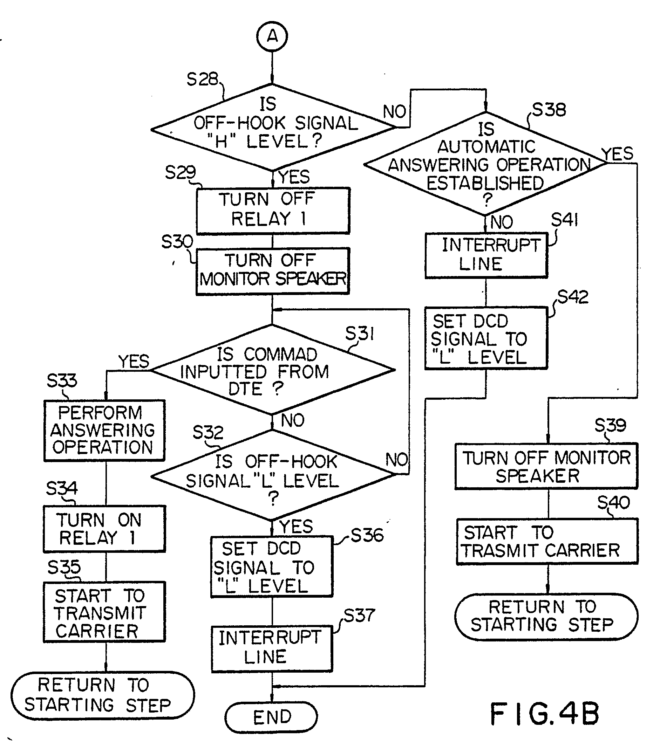

On the other hand, in case that the operation mode is returned to the data communication mode, a command for an initialization operation is inputted by the keyboard of DTE at the transmission side while the off-hook condition is maintained. Also, even at the DTE of the reception side, a command of a response operation is inputted to the modem control circuit. In case that no conversation has been established in the conversation mode due to absence of the operator at the reception side, the data communication is restarted after a predetermined time period, and thus an automatic response operation (will be discussed with reference to steps S38, S39 and S40 shown in a flowchart of Fig. 4B) is performed.

The above-described operation will now be described with reference to this flowchart of Figs. 3A and 3B.

At a step S9, a judgment is made whether or not a changing command is inputted from DTE of the transmission side. If no command is inputted ("NO" at the step S9), the control process is advanced to a next step S10.

At this step S10, another judgment is made whether or not the off-hook detection signal of the telephone receiver provided at the transmission side becomes an "L" level.

If the off-hook detection signal is not yet equal to the "L" level (i.e., the off-hook condition), the control process is returned to the step S9. Then, a judgment is made that the changing command is inputted and the control process is advanced to a step further S13.

At a step S10, if the off-hook signal becomes an "L" level, the telephone receiver is brought into the on-hook condition. This is such a case that either after, as described above, the conversation is accomplished, the operation mode is ended without being recovered into the data communication mode, or the operation mode is not recovered into the data communication mode since the callee does not hook up the telephone receiver.

As a result, in this case, the control process is advanced to a step S11 and further a step S12, and therefore is accomplished.

At a step S11, the DCD signal is set to be inactive ("L" level), whereas a message of the disconnection of the line is transmitted to DTE of the reception side at the step S12.

On the other hand, at the step S9, when the operation mode is recovered into the data communication mode, since the changing command is inputted from DTE employed in the transmission side (the off-hook signal becomes an "H" level), an initialization operation is executed in response to a command for commencing the initialization operation which has been inputted by operating the keyboard of DTE at the transmission side.

Subsequently, at a step S14, the relay 1 is turned ON (which has been turned OFF at the step S5). Then, the modem control circuit 15 is connected to the telephone line LINE. And at a step S15, the transmission of the communication carrier is again commenced. As a result, the data communication process (S2) again starts.

It should be noted that although the transmission of the carrier is interrupted during the changing to the conversation mode. At this time, the DCD signal which is supplied to the DTE from the DTE interface circuit 17 is maintained at an active state. Instead of this DCD signal, it is preferable to supply such a signal to the DTE, that indi cates the data communication is performed such as DSR signal (Data Set Ready signal). This DCD signal becomes active when the line is interrupted at the step S11.

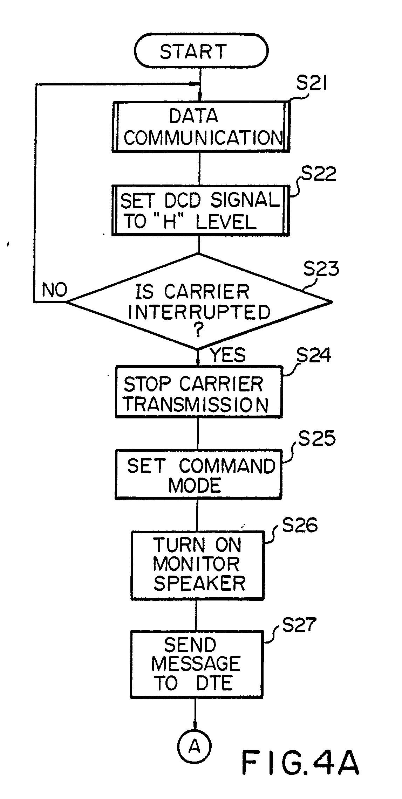

On the other hand, as shown in Figs. 4A and 4B showing the operation of the reception side, such a data communication process is executed that both the relays 1 and 2 are turned ON at a step S21 at the reception side for the data communication.

The DCD signal becomes active "H" level at a step S22. Instead of this DCD signal, for instance, a DSR signal may be employed.

At a step S23, a check is made whether or not the communication carrier sent from the caller disappears.

If the communication carrier does not disappear, the control process is returned to the step S21, and if the communication carrier disappears, the control process is advanced to a step S24.

At this step S24, the carrier transmission from the reception side is stopped, and then the control process is advanced to a step S25.

At this step S25, the modem control circuit 15 is set to a off-line command mode. Subsequently, a monitor speaker built in the terminal unit is turned ON at a step S26 for a stand-by condition.

At a next step S27, a message is transmitted to DTE per se . A display "hook off a telephone receiver" is made and a message similar to this display content is announced by the monitor speaker.

After receipt of this message, the telephone receiver is hooked off at the reception side so that a conversation can be made with the transmission side. If no conversation can be established between both sides due to absence of an operator, or the like, the receiver off-hook signal is an "L" level.

As a result, a judgment is made whether or not this off-hook detection signal becomes "H" level within a predetermined time period at a step S28. If this detection signal is equal to an "H" level, the control process is advanced to a step S29 and a step S30 because it is necessary to be changed into the conversation mode.

At the step S29, the relay 1 is turned off (disconnected) so as to disconnect the modem control circuit 15 from the telephone line. At the step S30, the monitor speaker is turned OFF.

Thereafter, when the control process is advanced to a step S31, a check is made whether or not a command to change the operation mode into the data communication mode is inputted from the DTE of the reception side. If "NO", then the control process is advanced to a step S32, in which another check is made whether or not the off-hook detection signal of the telephone receiver is equal to an "L" level. If YES, then the conversation is accomplished and the control process is advanced to further steps S36 and S37. Thus, the DCD signal is made inactive ("L") and the line is interrupted.

If YES at the step S31 after the step S30, otherwise if the off-hook signal is not equal to the "L" level and YES at the step S31, the off-hook detection signal becomes an "H" level. Since the data communication is required after the conversation, a response operation to the initialization operation (same as the above-described step S13) effected from the transmission side is executed at a step S33. In response to a command to start the response operation made by the transmission side, the response operation is carried out.

At a step S34, the relay 1 is turned on, and the transmission of the communication carrier is commenced at a step S35. Thereafter, the control process is returned to the starting step.

On the other hand, in case that the off-hook detection signal is equal to an "L" level at the previous step S28, the control process is advanced to a step S38.

At this step S38, a judgment is made whether or not an automatic response or answering operation is established. The automatic answering operation implies that an answering tone is transmitted and a data communication is recovered from a command mode. In case that the automatic answering operation is not yet established, the line to DTE is interrupted (at a step S41) and the DCD signal is made inactive "L" (at a step S42), and then the control process is ended.

To the contrary, when the automatic answering operation is established, the monitor speaker is turned off (at a step S39) and the carrier transmission is restarted (at a step S40). Then, the data communication mode is recovered.

Fig. 5 is a flowchart for explaining operations of calling routine which is the subroutine of the step S1 in Fig. 3A and includes a callee discriminating function as well as normal calling procedure.

In the normal mode, as previously described, both a conversation mode and a data communication mode may be set.

In the conversation mode, under the condition that the relay 1 is turned off and the relay 2 is turned on, both the telephone receivers are connected to each other via the telephone line so that the terminal unit may be used as a telephone receiver.

In the data communication mode, only the data communica tion may be performed. In this case, the data communication is carried out by such a condition that the modem control circuit 15 turns off the relay 2 and turns on the relay 1. As a result, the telephone receiver 14 is being disconnected from the telephone line LINE. Then, the modem control circuit 15 transmits a communication carrier via the signal line L2, L3 and telephone line LINE to a reception side, and also receives another communication carrier via the telephone line LINE and signal line L2 and L3 from a transmission side.

At this time, when such a function capable of discriminating callee is set to the data communication terminal unit, the modem control circuit 15 turns on the relay 2 (connecting condition). As a consequence, the receiver off-hook detecting circuit 11 can detect that the telephone receiver 14 is brought into the off-hook condition (i.e., the receiver is hooked up).

As previously explained, in case that the callee discriminating function has been set at the terminal unit of the data transmission side, even when the telephone receiver is mistakenly hooked up by a callee at the commencement of the data communication, this condition is judged by the caller.

Accordingly, the caller can hook up the telephone re ceiver and can substitute the communication mode for the conversation mode without switching.

In other words, in this case, if the operator at the data reception side hooks off the telephone receiver at the starting of the data communication, which is not requested by the operator at the data transmission side, the telephone receiver employed in the data communication terminal unit of the data reception side is connected to the telephone line by the changing means.

To the contrary, both the modems employed in the transmission terminal unit and reception unit cannot be connected with each other, and a voice message is inputted via the telephone line. This message is detected so as to display "pick up a telephone receiver" on DTE and announced by the monitor speaker.

When the operator at the transmission side hooks off the receiver 14 in response to this announcement, the telephone line is connected to the telephone receiver 14 by the changing means also at the transmission side. As a result, the data transmission mode is changed into the conversation mode so that a telephone conversation may be made.

At this time, in the modem control circuit 15 employed at the data transmission side where the data transmission mode is changed into the conversation mode, a result code indicative of the connection condition with the telephone line is outputted to DTE, and also the DCD signal (communication carrier detection signal) to DTE is maintained at an active state. A waiting signal (dummy signal) for causing the connection between the data terminal unit DTE and telephone line LINE to be brought into the waiting condition, is transmitted to the data terminal unit DTE.

As a result, a conversation may be made between the transmission side and reception side, and furthermore restarting the data communication may be realized by a simple operation after this conversation.

Accordingly, in the data communication terminal unit employed at the data transmission side, the conversation mode is again recovered into the data communication mode in response to a predetermined command input supplied from this DTE.

That is to say, even when the operation mode is changed into the above-described conversation mode and the communication carrier is stopped (disappears), as previously stated, the data communication system according to the present invention transmits the result code and holds the communication carrier detecting signal (DCD signal) from the DTE interface circuit 17 to DTE at the active condition. As a result, in case that a certain communication program is executed at the data terminal unit DTE, this data terminal unit is not reset by this communication program. In the conversation mode, the DCD signal is maintained at an active state during the conversation, so that the application software of DTE mistakenly recognizes the operation mode as the data communication mode. This is because the resetting operation by the software can be avoided. Even when the operation mode is temporarily changed into the conversation mode, the data communication condition is kept if it is the communication software having a terminal mode, and the data communication mode can be again recovered in response to the command input.

It should be noted that when the connection with the telephone line LINE is interrupted, this DCD signal is brought into the inactive state.

When this data communication is commenced, both the discrimination effected at the callee side and the control to change the operation mode into the conversation mode are performed by the modem CPU of the modem control circuit 15.

Fig. 5 is a flowchart for representing a callee discriminating process (calling routine) executed at the modem CPU in the modem control circuit 15 of the terminal unit.

As represented in the control program at the reception side (callee side ) of Fig. 5, at a step S51, the relay 1 is turned on and the relay 2 is turned on (to be connected) in order to commence the data communication process.

When the relay 1 is turned on, the data communication can be performed under the control of the modem control circuit 15. Also, when the relay 2 is turned on, the off-hook condition of the telephone receiver can be detected by turning on the relay 2.

At a step S52, a call signal (dialing call) is sent out to the telephone line.

At a step S53, an answer tone and the like derived from the modem at the reception side is detected by the modem control circuit 15, and a judgment is made whether or not the reception side corresponds to the modem.

In case that a judgment is made that the callee corresponds to the modem for communication purpose, the control process is advanced to a step S63, in which it is connected to the modem employed at the reception side and then the relay 2 is turned off. As a result, the data communication can be effected between the modems employed in both the data transmission side and data reception side. Then, the process is accomplished under data communication condition.

If NO judgment is made that the data reception side does not correspond to the modem, at a step S54, another judgment is made whether or not the data reception side corre sponds to the operator (telephone receiver).

If YES, then the control process is advanced to a step S55, in which a signal indicative of such a message "pick up a telephone receiver" is sent to DTE per se (i.e., at the data transmission side). In response this signal, DTE displays, for instance, on its display "pick up a telephone receiver". Further, this may be announced by the monitor speaker 23.

Subsequently, the control process is advanced to a step S56 at which a check is made whether or not the off-hook detection signal becomes an "H" level within a predetermined time period by the receiver off-hook detecting circuit 11.

If the off-hook detection signal is at an "L" level condition, a judgment is made that the telephone receiver 14 is brought into the off-hook condition, and at a step S67, a time abort process after the time has passed is executed. This is such a case that the conversation is not wanted at the transmission side, or an operator is apart from the communication system.

On the other hand, at a step S56, when the telephone receiver 14 employed at the data transmission side is brought into the off-hook condition (i.e., an "H" level), the control process is advanced to a step S57. This is such a case that the conversation is desired between the caller and callee while recognition is made that the caller corresponds to the telephone receiver.

It should be noted that when the voice message is not detected at the above step S54, the control process is advanced to a step S64.

At this step S64, a check is made whether or not the off-hook detection signal is equal to an "H" level. In a case that the modem CPU cannot judge whether the callee corresponds to the modem or operator, the operator at the data transmission side hears the sound produced by the monitor speaker so as to judge whether or not the conversation is wanted by picking up the telephone receiver employed at the data transmission side.

As a result, if the signal is equal to an "H" level, a judgment is made that the conversation is wished and therefore the control process is advanced to a step S57.

When the telephone receiver is not picked up, a judgment is made whether or not a predetermined time period has passed at a step S65. If NO, then the control process is returned to the previous step S53. Conversely, if YES, then the time abort process is executed and the relay 1 is turned off so as to accomplish this communication control process at a step S66.

In case that the conversation is made by changing the operation mode into the conversation mode at the step S56 (YES) and step S64 (YES), the relay 1 is turned off (opened) so as to interrupt the connection between the modem control circuit 15 and telephone line LINE. Furthermore, the relay 2 is held at the ON-state. The telephone line LINE is connected to the telephone receiver 14.

In this case, since the operator at the reception side hooks off the telephone receiver, the conversation can be made via the telephone line LINE with the operator at the transmission side. During this conversation mode, the transmissions of the communication carriers from both sides are interrupted.

Thereafter, the control process is advanced to a step S58, in which a result code is transmitted to DTE, which implies that the telephone line LINE has been connected to the modem control circuit 15 in accordance with a predetermined rule. Furthermore, at this step S58, the modem control circuit 15 sends out the DCD signal (in an active state) from the interface circuit 17 to DTE.

Now, when the conversation is completed by way of the telephone receivers between the operators at the transmission and reception sides, the telephone receiver 14 employed at the transmission side is hooked off.

On the other hand, when the operation mode wished to be recovered to the data communication mode just after the conversation is ended, an initialization command is inputted from the keyboard of DTE at the transmission side while maintaining the off-hook condition of this telephone receiver 14. Thus, the communication program for each of sides is initialized and the communication conditions and the like are set. In this case, the respective operations are performed at the proper timing in both sides.

As a result, at a next step S59, a judgment is done whether or not a command to start an initialization operation has been inputted by operating the keyboard of DTE. If no command is inputted, then the control process is advanced to a subsequent step S60.

At the step S60, another check is made whether or not the off-hook detection signal of this telephone receiver 14 becomes an "L" level. If YES, then the operation mode is completed without being returned to the data communication mode after the conversation, since the telephone receiver is brought into the on-hook condition.

Thus, in this case, the control process is advanced to steps S61 and S62 so that it is ended.

At the step S61, the signal for indicating that the modem data such as the DCD signal is being transmitted is set to an inactive state ("L" level) whereas the line is interrupted with respect to DTE at the next step S62.

On the other hand, in case that the data communication is performed during the conversation mode, as previously explained, the command is inputted from the keyboard while the receiver 14 is picked up.

Accordingly, if the command is inputted from DTE at the step S59, the control process is advanced to further steps S68 through S70.

Subsequently, at the step S69, the relay 1 which has been turned off at the previous step S57 is turned on (connected). Then, the modem control circuit 15 is connected to the telephone line LINE. As a result, at the step S70, the response operation is waited at the data communication system of the data reception side, and the transmission of the communication carrier is again commenced so that the data communication is restarted.

It should be noted that as previously stated, although the transmission of the communication carrier is interrupted during the conversation mode, the DCD signal sent from the DTE interface circuit 17 to DTE is held at an active condition. This DCD signal is made inactive only when the line is interrupted at the step S17. It should be also noted that this DCD signal may be any signal for representing the data communication to DTE, for instance, the DSR signal.

Furthermore, the above-described response operation implies such an operation required for transmitting the answer tone from the data reception side and for a handshake operation, e.g., the operation mode is switched into the data communication mode at the data communication system of the reception side.

**Claims**

1. A data communication terminal system in which a communication is carried out via an available telephone line by switching a telephone receiver and a data terminal unit, characterized by:
switching means (15) for switching a data communication mode for transmitting data derived from the data terminal system together with a communication carrier, and a telephone communication mode for talking by the telephone receiver without the communication carrier;

off-hook detecting means (11) for detecting an off-hook condition of the telephone receiver so as to output a signal for instructing said switching means (15) to change the data communication mode into the telephone communication mode;
announcing means (21/23) for announcing a change in the communication mode to an operator; and,
control means (15) for actuating the announcing means (21/23) when an operation mode of a data communication terminal system employed at an opposite side is switched to the telephone communication mode.

2. A data communication terminal system as claimed in Claim 1,
wherein said control means (15) includes means for judging the change of the operation mode of said data communication terminal unit at the opposite side into the telephone communication mode based upon absence of the communication carrier.

3. A data communication terminal system as claimed in Claim 1,
wherein said control means (15) causes said switching means (15) to change the operation mode into the data communication mode when said off-hook detecting means (11) is not operated even if a predetermined time period has passed after said announcing means (21/23) is operated.

4. A data communication terminal system as claimed in Claim 1, further characterized by:
holding means (15) for holding a data terminal unit at a waiting condition in response to the switching operation by said switching means (15) to the telephone communication mode.

5. A data communication terminal system as claimed in Claim 4,
wherein said holding means (15) holds the data terminal unit at the waiting condition by supplying to said data terminal unit a dummy signal for indicating that said holding means (15) is under a data communication.

6. A data communication terminal system as claimed in Claim 5,
wherein said dummy signal is produced in such a manner that a signal which is made active by detecting the communication carrier furnished from the communication terminal system employed at the transmission side, is maintained at an active state even after the communication carrier disappears.

7. A data communication terminal system as claimed in Claim 1, further characterized by:
judging means (15) for judging whether or not the operation mode of the data communication terminal system at the opposite side is set to the data communication mode or telephone communication mode at the commencement of the communication;
wherein said control means (15) operates said announcing means (21/23) under the condition that a judgment is made by said judging means (15) that the operation mode of said data communication terminal system employed at the opposite side is the telephone communication mode, and also an off-hook condition of the own telephone receiver is detected by said off-hook detecting means (11).

FIG. 1

FIG.2

TELEPHONE RECEIVER — I4

RELAY 2

RECEIVER OFF-HOOK DETECTING CIRCUIT — I1

TELEPHONE LINE — LINE

RELAY 1

ANALOG HYBRID CIRCUIT — I3

RING DETECTING CIRCUIT — I9

SPEAKER CIRCUIT — 21

MODEM CONTROL CIRCUIT — I5

DTE INTERFACE CIRCUIT — I7

23

(CONTROL SIGNAL FOR RELAY 2)

(OFF-HOOK DETECTION SIGNAL FOR RECEIVER)

(CONTROL SIGNAL FOR RELAY 1)

(RING DETECTION SIGNAL)

(MONITOR SPEAKER CONTROL SIGNAL)

L1  L2  L3  L4  L  OL

START

CALLING ~S1

B

DATA
COMMUNICATION ~S2
PROCESS

SET DCD SIGNAL ~S3
TO "H" LEVEL

NO
IS OFF-HOOK SIGNAL S4
"H" LEVEL ?

YES

TURN OFF ~S5
RELAY 1

INTERRUPT TO ~S6
TRANSMIT CARRIER

CHANGE INTO ~S7
COMMAND MODE

TRANSMIT MESSAGE ~S8
TO DTE

A          FIG.3A

(A)

S9

YES

IS COMMAND
INPUTTED FROM
DTE ?

NO

S10

IS
OFF-HOOK SIGNAL
"L" LEVEL ?

NO

S13

EXECUTE
INITIALIZATION

YES

SET DCD
SIGNAL
TO "L" LEVEL

S11

S14

TURN ON
RELAY 1

S12

INTERRUPT
LINE TO
DTE

S15

START TO
TRANSMIT CARRIER

END

(B)

FIG. 3B

START

S21
DATA
COMMUNICATION

S22
SET DCD SIGNAL
TO "H" LEVEL

S23
NO ← IS CARRIER
INTERRUPTED
?
↓ YES

S24
STOP CARRIER
TRANSMISSION

S25
SET COMMAND
MODE

S26
TURN ON
MONITOR
SPEAKER

S27
SEND
MESSAGE
TO DTE

Ⓐ

FIG.4A

FIG.4B

CALLING

TURN ON
RELAYS 1 AND 2 — S51

TRANSMIT CALL SIGNAL
TO TELEPHONE LINE — S52

S53
DOES THE MODEM
ANSWER ? — YES

S64
IS
OFF-HOOK
SIGNAL "H"
LEVEL
? — YES

NO

NO

S54
DOES THE OPERA-
TOR ANSWER
?

NO

S63
CONNECT WITH
MODEM &
TURN OFF RELAY 2

A

HAS
PREDETERMI-
NED TIME PERIOD
PASSED ? — NO

S65

YES

S55
SEND RECEIVER PICK-UP
MESSAGE TO DTE

S66
TIME A BORT
PROCESS

S56
IS
OFF-HOOK SIG-
NAL "H" LEVEL WITHIN
PREDETERMINED TI-
ME PERIOD
? — NO

END
(UNDER LINE
DISCONNECTION)

YES

S67
TIME A BORT
PROSESS

S57
TURN OFF RELAY 1 AND
TURN ON RELAY 2

S68
INITIALIZATION

S58
TRANSMIT RESULTCODE
DCD SIGNAL TO DTE

S69
TURN ON
RELAY 1

S59
IS COMMAND
INPUTTED FROM
DTE ? — YES

NO

S61
SET DCD
SIGNAL TO
"L" LEVEL

S70
RESTART
CARRIER
TRANSMISSION

S60
IS OFF-HOOK SIG-
NAL "L" LEVEL
? — NO

YES

S62
INTERRUPT
LINE TO DTE

A

END
(UNDER DATA
COMMUNICATION)

END
(UNDER LINE
DISCONNECTION)

F I G. 5